(19) Europäisches Patentamt
European Patent Office
Office européen des brevets

(11) Veröffentlichungsnummer: **0 560 008 A1**

(12) **EUROPÄISCHE PATENTANMELDUNG**

(21) Anmeldenummer: **93100176.2**

(51) Int. Cl.[5]: **B32B 5/18**, B32B 25/08

(22) Anmeldetag: **08.01.93**

(30) Priorität: **12.03.92 DE 4207897**

(43) Veröffentlichungstag der Anmeldung: **15.09.93 Patentblatt 93/37**

(84) Benannte Vertragsstaaten: **AT BE CH DE FR GB IT LI NL SE**

(71) Anmelder: **HÜLS AKTIENGESELLSCHAFT**
**D-45764 Marl(DE)**

(72) Erfinder: **Schmidt, Friedrich Georg, Dr.**
**Brukterer Strasse 46**
**W-4358 Haltern(DE)**
Erfinder: **Knipp, Herbert**
**Stockwieser Kamp 20**
**W-4358 Haltern 5(DE)**
Erfinder: **Münninghoff, Wilhelm**
**Kölner Strasse 40**
**W-5210 Troisdorf(DE)**

(54) **Kunststoff-Schaum-Verbundwerkstoffe.**

(57) Aufgabe war die Schaffung einer innigen Verbindung zwischen Latex-Schaumstoffen und bestimmten festen Trägermaterialien. Dieses Ziel wurde mit Trägermaterialien aus einer polyphenylenetherhaltigen thermoplastischen Formmasse und einem Latex erreicht, der, bezogen auf den gesamten Kautschukgehalt, aus folgenden Komponenten besteht:

I. 20 bis 100 Gewichtsprozent SBR-Latex mit einem Mindeststyrolanteil des polymeren Feststoffs von größer als 15 Gewichtsprozent und

II. 80 bis 0 Gewichtsprozent Naturlatex oder andere, synthetische Latices.

Nach Vulkanisation zeigen diese Verbunde beim Versuch der Trennung Kohäsivbruch im Schaumkörper.

EP 0 560 008 A1

Die Erfindung betrifft ein Verfahren, mit dem eine innige Verbindung zwischen Latex-Schaumstoffen und bestimmten festen Trägermaterialien hergestellt werden kann, sowie die durch dieses Verfahren hergestellten Verbunde.

Schaumstoffe werden für viele Zwecke, z. B. in der Möbelindustrie für Polstermöbel, Matratzen und viele andere Anwendungen, in der Automobilindustrie im Fahrzeuginnenbereich, in der Bauindustrie für Rohrisolierungen und Dämmaterialien und in vielen anderen Bereichen eingesetzt.

Häufig sind geschäumte, elastische Materialien jedoch nur unter Schwierigkeiten zu montieren oder mit festen Trägermaterialien zu verbinden. Bisher wurden Klebstoffe verwendet, oder es wurde versucht, mit mechanischen Verkrallungen oder mit Hinterschneidungen eine gewisse Verbindung zu erreichen. Als festes Trägermaterial dient hierbei ein thermoplastischer Konstruktionswerkstoff, z. B. in Form von spritzgegossenen, extrudierten, blasgeformten, gepreßten, laminierten oder in sonstiger Weise hergestellten Formteilen.

Überraschend wurde nun gefunden, daß bei Verwendung bestimmter thermoplastischer Konstruktionswerkstoffe während des Vulkanisationsprozesses eine innige Verbindung zwischen einem Latex-Schaumstoff und dem thermoplastischen Konstruktionswerkstoff entsteht. Damit können in einem Schritt beständige Schaumstoff-Kunststoff-Verbunde hergestellt werden.

Verbunde aus Thermoplasten und Gummi sind bekannt. In der EP-A-0 196 407 beispielsweise wird ein Verfahren zur Herstellung eines Verbundes zwischen Formmassen auf Basis von Polyphenylenethern einerseits und Doppelbindungen enthaltenden, mit Schwefel vulkanisierbaren Kautschuken andererseits offenbart. Die Kautschuke enthalten hierbei Füllstoffe und Weichmacher. Die Covulkanisation gelingt jedoch nur, wenn man diese bei Temperaturen zwischen 140 und 200 °C durchführt. Selbstverständlich müssen hierbei die Formmassen auf Basis von Polyphenylenether eine entsprechend hohe Wärmeformbeständigkeit aufweisen, was ihre Zusammensetzung stark eingrenzt und außerdem eine schwierige Verarbeitung bedingt.

Die Verwendung von Kautschuklatices für dieses Verfahren erschien wenig erfolgversprechend. Es war nicht nur zu erwarten, daß das enthaltene Wasser als dritte Phase die Covulkanisation stören würde; vor allem jedoch erschien die Begrenzung der Covulkanisationstemperatur auf maximal ca. 100 °C als prohibitiv. Aus diesen Gründen war die Bildung eines festen Verbunds in diesem Fall nicht zu erwarten.

Überraschenderweise wurde jedoch gefunden, daß gerade bei Verwendung eines Latex-Naßschaums feste Verbunde erhalten werden, wenn als thermoplastischer Konstruktionswerkstoff Formmassen auf Basis von Polyphenylenether verwendet werden, die folgende Bestandteile enthalten:

10 - 100 Gew.-Teile Polyphenylenether (A),
0 - 80 Gew.-Teile Polystyrol (B),
0 - 30 Gew.-Teile schlagzähmodifizierende Zusätze (C),
0 - 40 Gew.-Teile Verstärkungsmittel und/oder Füllstoffe (D),
0 - 30 Gew.-Teile Brandschutzmittel (E) und
0 - 15 Gew.-Teile Zusatzstoffe (F),

wobei die Formbeständigkeit in der Wärme nach ISO 75, Methode B größer als 90 °C, bevorzugt größer als 100 °C ist.

Unter Formmassen sollen im Rahmen dieser Erfindung ungeformte Mischungen angesehen werden, die sich durch thermoplastische Verarbeitung zu Formteilen oder zu Halbzeug verarbeiten lassen. Die Formmassen können beispielsweise als Granulat vorliegen.

Der Polyphenylenether (PPE) ist im wesentlichen aus Einheiten der Formel

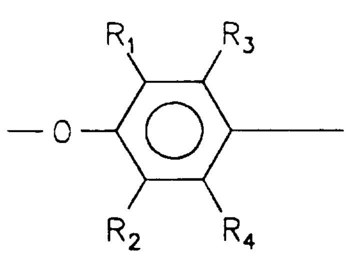

aufgebaut, wobei $R_1$ und $R_2$ entweder für eine n-Alkylgruppe mit bis zu 6 C-Atomen stehen oder $R_1$ Wasserstoff und $R_2$ einen tertiären Alkylrest mit bis zu 6 C-Atomen bedeutet; $R_3$ und $R_4$ stehen, unabhängig voneinander, für eine Methylgruppe oder Wasserstoff.

In einer bevorzugten Ausführungsform ist $R_1 = R_2 = CH_3$ sowie $R_3 = R_4 = H$.

Diese Polyphenylenether können nach jedem dem Stand der Technik entsprechenden Verfahren aus den entsprechenden Phenolen oder 4-Halogenphenolen hergestellt werden. Vorzugsweise werden als Katalysatoren Kupfer-Amin-Komplexe oder manganhaltige Systeme benutzt (vgl. DE-OSS 32 24 692 und 32 24 691 sowie US-PSS 3 306 874, 3 306 875 und 4 028 341).

Die Viskositätszahlen, bestimmt nach DIN 53 728 in Trichlormethan bei 25 °C, liegen im Bereich von 35 bis 100 ml/g (J-Wert nach DIN 53 728; Konzentration 5 g/l). Bevorzugt sind Polyphenylenether mit einer Viskositätszahl von 40 bis 70 ml/g.

Mit umfaßt werden natürlich auch modifizierte Polyphenylenether, z. B. Pfropfcopolymere mit Vinylmonomeren, Styrol oder anderen Modifizierungsreagenzien.

Die Polyphenylenether werden üblicherweise als Pulver oder Granulat eingesetzt.

Als Polystyrol-Komponente (B) werden sowohl Styrolhomopolymerisate als auch schlagzäh modifizierte Styrolpolymerisate eingesetzt. Als monovinylaromatische Verbindungen kommen dabei insbesondere Styrol in Betracht, ferner die kern- oder seitenalkylierten Styrole. Vorzugsweise wird jedoch allein Styrol verwendet. Die Homopolymerisate werden dabei nach den bekannten Verfahren in Masse, Lösung oder Suspension hergestellt (vgl. Ullmann's Encyclopädie der technischen Chemie, Band 19, Seite 265, Verlag Chemie, Weinheim 1980). Die Homopolymerisate können Molekulargewichtsmittel (Mv) von 1 000 bis 250 000 aufweisen. Die meist angewandten Verfahren zur Herstellung schlagzähmodifizierter Styrolpolymerisate sind die Polymerisation in Masse oder Lösung und Verfahren zur Masse-Suspensionspolymerisation, wie sie z. B. in den US-PSS 2 694 692 und 2 862 906 beschrieben werden; selbstverständlich sind aber auch alle anderen bekannten Verfahren anwendbar.

Als Kautschuke werden die üblicherweise für die Schlagzähmodifizierung von Styrolpolymerisaten gebräuchlichen natürlichen oder synthetischen Kautschuke eingesetzt. Geeignet sind z. B. Naturkautschuk, Polybutadien, Polyisopren und Mischpolymerisate, z. B. statistische, sequentielle oder Blockcopolymere des Butadiens und/oder Isoprens mit Styrol und anderen Comonomeren, die eine Glastemperatur unter -20 °C besitzen. Besonders geeignet sind Butadien-Polymerisate mit einem 1,4-cis-Gehalt, der zwischen 25 und 99 % liegt. Es können aber auch Acrylatkautschuke, EPDM-, Polybutylen- oder Polyoctenamerkautschuke eingesetzt werden. Die schlagzähmodifizierten Styrolpolymerisate besitzen einen Weichkomponentenanteil von 10 bis 60 Gewichtsprozent, vorzugsweise von 20 bis 45 Gewichtsprozent. Die Teilchengröße der Weichkomponente sollte im Bereich von 0,2 bis 8 µm liegen.

Als schlagzähmodifizierende Zusätze (C) sind z. B. die in den DE-ASS 19 32 234, 20 00 118, DE-OSS 22 55 930, 27 50 515, 24 34 848, 30 38 551, EP-A-0 080 666 und WO-A-83/01 254 beschriebenen unterschiedlich aufgebauten, vornehmlich aus vinylaromatischen und konjugierten Dienblöcken bestehenden Blockcopolymerisate geeignet. Es können aber auch andere schlagzähmodifizierende Zusätze, wie Polyoctenamer, Pfropf- oder Blockcopolymere aus vinylaromatischen Monomeren und EP(D)M, Acrylatkautschuke oder Gemische aus SBR-Kautschuken mit hohen und niedrigen Styrolgehalten, verwendet werden.

Als Verstärkungsmittel bzw. Füllstoffe (D) können z. B. Kurz-, Lang- oder Endlos-Glasfasern sowie organische oder mineralische Füllstoffe, wie z. B. Talkum oder Glaskugeln, verwendet werden.

Die erfindungsgemäße Formmasse kann gegebenenfalls Brandschutzmittel (E) aus der Gruppe der aromatischen Phosphate oder Phosphinoxide, wie z. B. Triphenylphosphat, Diphenylkresylphosphat und/oder Diphenylisopropylphenylphosphat, enthalten. Es ist auch bekannt, daß man halogenhaltige Brandschutzmittel verwenden kann. Infrage kommen beispielsweise organische Verbindungen, wie sie z. B. in der Monographie von H. Vogel, "Flammfestmachen von Kunststoffen", Hüthig-Verlag, 1966, auf den Seiten 94 bis 102 beschrieben werden. Auch halogenierte Polymere, wie z. B. halogenierte Polyphenylenether (z. B. DE-OS 33 34 068), insbesondere bromierte Polyphenylenether oder bromierte Oligo- bzw. Polystyrole mit vorzugsweise mehr als 30 Gewichtsprozent Halogen, werden als Brandschutzmittel eingesetzt. Im Falle des Einsatzes von halogenhaltigen Brandschutzmitteln empfiehlt es sich, Verbindungen des Antimons, Bors und/oder des Zinns in Mengen von 0,5 bis 10 Gewichtsprozent, bezogen auf die thermoplastische Masse, zuzusetzen, um die Brandschutzwirkung zu erhöhen. In der DE-OS 29 06 336 und in der DE-OS 39 04 207 werden spezielle Kohlenwasserstoffbrandschutzsysteme beschrieben, die in der erfindungsgemäßen Formmasse enthalten sein können.

Die erfindungsgemäße Masse kann Zusatzstoffe (F), wie z. B. Pigmente, organische Farbstoffe, Oligomere, Antistatika, Stabilisatoren und Verarbeitungshilfsmittel, enthalten. Geeignete Stabilisatoren umfassen organische Phosphite, wie z. B. Didecylphenylphosphit und Trilaurylphosphit, sterisch gehinderte Phenole, Tetramethylpiperidin-, Benzophenon- und Triazolderivate sowie Stabilisatoren auf Basis gehinderter Amine, sogenannte HALS-Verbindungen. Als Verarbeitungshilfsmittel eignen sich z. B. Polyethylen oder Wachse, wie z. B. oxidierte Kohlenwasserstoffe sowie ihre Ester- oder Amidderivate oder ihre Alkali- und Erdalkalisalze.

Die einzelnen Komponenten werden in bekannter Weise entweder im Batchbetrieb oder kontinuierlich in der Schmelze gemischt. Für das Schmelzen und Vermischen eignen sich die üblichen Geräte zur Behandlung von hochviskosen Schmelzen. Besonders geeignet sind Doppelschneckenkneter und Kokneter.

Die erfindungsgemäßen Formmassen werden bevorzugt dadurch hergestellt, daß der Polyphenylenether, gegebenenfalls zusammen mit einer Schlagzähkomponente und/oder einem Styrolpolymerisat und den Komponenten (D) bis (F) aufgeschmolzen und vermischt wird. Die Komponenten (B) bis (F) können auch in die Schmelze von (A) eingearbeitet werden. Es kann beispielsweise ein kontinuierlich arbeitender, gleichsinnig drehender Zweiwellenkneter verwendet werden. Die Schmelzetemperatur liegt hierbei zwischen 250 und 350 °C, vorzugsweise zwischen 270 und 320 °C. Eine gleichzeitige Entgasung der Schmelze ist zweckmäßig.

Aus den Formmassen können die für den Verbund eingesetzten Formkörper bzw. Träger nach allen üblichen Formgebungsverfahren hergestellt werden, beispielsweise durch Spritzgießen, Extrusion oder Preßformen. Es ist jedoch darauf zu achten, daß die Oberflächen nicht verunreinigt oder oxidierenden Einflüssen ausgesetzt werden, da sonst Passivierung eintreten kann.

Im Rahmen der vorliegenden Erfindung wird ein Latex verwendet, der bezogen auf den gesamten Kautschukgehalt aus folgenden Komponenten besteht:

I. 20 bis 100 Gewichtsprozent SBR-Latex mit einem Mindeststyrolanteil des polymeren Feststoffs von größer als 15 Gewichtsprozent und

II. 80 bis 0 Gewichtsprozent Naturlatex oder andere, synthetische Latices.

Geeignete synthetische Latices, die dem SBR-Latex zugemischt werden können, sind hier beispielsweise Polychloropren-Latices (CR) und Acrylnitril-Latices (NBR).

Derartige Latices sind dem Fachmann bekannt, so daß sich eine weitere Beschreibung erübrigt. Üblicherweise werden sie durch Emulsionspolymerisation in Gegenwart einer üblichen Fettseife und/oder Harzseife erhalten. Zur Beeinflussung der Härte kann es in vielen Fällen sinnvoll sein, auf bekannte Weise einen Verstärkerlatex zuzusetzen.

Allerdings werden im Grenzbereich der Zusammensetzung, d. h. bei einem SBR-Anteil von nur 20 Gewichtsprozent, nicht in jedem Fall akzeptable Ergebnisse erhalten. Es wird daher bevorzugt, daß der Latex, bezogen auf den gesamten Kautschukgehalt, mindestens 32 Gewichtsprozent SBR-Latex enthält, insbesondere dann, wenn der Styrolanteil des Latex relativ niedrig ist.

Ein weiterer Vorzugsbereich ergibt sich dadurch, daß bei den Latex-Mischungen folgende Formel zu berücksichtigen ist:

100 < (Prozent PPE in der thermoplastischen Formmassen) + + (Prozent SBR in der verwendeten Latexmischung),

wobei wiederum bevorzugt die Latex-Mischung in diesem Fall mehr als 50 Gewichtsprozent SBR-Latex enthält.

Bei Latex-Mischungen, die 32 bis 50 Gewichtsprozent SBR-Latex enthalten, wird ein weiterer Vorzugsbereich durch folgende Formel festgelegt:

130 < (Prozent PPE in der thermoplastischen Formmasse) + + (Prozent SBR in der verwendeten Latexmischung).

Die verwendeten Latices sollten einen Feststoffgehalt von mindestens 55, vorzugsweise mindestens 60 Massen-% gemäß DIN 53 563 aufweisen.

Das Latex-Compound kann weiterhin die in der Kautschuktechnik üblichen feinteiligen Füllstoffe enthalten, wie z. B. Kreide, Kaolin, Schiefermehl und Aluminiumhydroxid.

Weiterhin enthält das Latex-Compound ein bekanntes Vulkanisationssystem. Ein bevorzugtes Vulkanisationssystem enthält Schwefel in Kombination mit den üblichen Beschleunigern. Die Menge des Vulkanisationsmittels richtet sich nach den übrigen Komponenten und kann gegebenenfalls durch einfache, orientierende Versuche ermittelt werden.

Weitere übliche Zusatzstoffe sind beispielsweise Alterungs- und Lichtschutzmittel, Verdickungsmittel, wie z. B. Carboxymethylcellulose und flammhemmende Zusatzstoffe.

Aus einem derartigen Latex-Compound wird nach dem Stand der Technik Latexschaum in der Weise hergestellt, daß die Masse durch Einschlagen von Luft oder einem anderen Gas aufgeschäumt und auf die gewünschte Dichte gebracht wird. Die Dichte des Latexschaums ist hierbei unkritisch. Auch im Grenzfall der sehr geringen bis fehlenden Schäumung ist die Haftung im Verbund sehr gut. Bei dem anspruchsgemäßen Latex-Schaumstoff ist daher dieser Grenzfall ausdrücklich mit eingeschlossen.

Nach Erreichen des entsprechenden Verschäumungsgrades wird üblicherweise Geliermittel, wie z. B. Natriumsilikofluorid, Ammoniumacetat oder Kohlendioxid, zugemischt und der Schaum, gemeinsam mit dem aus dem thermoplastischen Konstruktionswerkstoff bestehenden Träger, in eine Form gebracht oder, wenn der Träger gleichzeitig die Form darstellt, auf diesen aufgebracht oder in diesen eingefüllt.

Die mit dem Schaum und gegebenenfalls dem Träger beschickte Form wird anschließend zum Vulkanisieren in einen Applikator gebracht, der beispielsweise mit Dampf beheizt wird. Nach dem Vulkanisieren wird der Latexschaum-Kunststoff-Verbund gegebenenfalls aus der Form entnommen und anschließend gewaschen und getrocknet.

Gelierung und Vulkanisation können auch im Infrarotfeld oder bei Verwendung spezieller Formmaterialien auch durch Mikrowelleneinstrahlung bewirkt werden, wie es in der DE-OS 39 00 809 beschrieben ist.

Beim Grenzfall fehlender Verschäumung, also beim Aufbringen eines Latexfilms, ist die Zugabe eines Geliermittels nicht nötig.

Die Vulkanisation wird unter den für die Herstellung von Latexschaum oder für die Filmherstellung üblichen Bedingungen durchgeführt.

Bezüglich näherer Einzelheiten über Herstellung, Zusammensetzung und Verarbeitung geeigneter Latices sei auf die DE-OSS 34 47 585 und 37 04 118 verwiesen.

In den folgenden Beispielen wurden folgende Komponenten verwendet:
Als Polyphenylenether (A) wurde ein Poly-2,6-dimethyl-1,4-phenylenether mit einer Lösungsviskosität (J-Wert) von 63 ml/g eingesetzt.

Das in den Beispielen verwendete Polystyrol (B) ist ein schlagzäh eingestellter Polystyroltyp, der unter der Bezeichnung VESTYRON$^R$ 616-30 von der Hüls AG, Marl, bezogen werden kann.

Als schlagzähmodifizierende Zusätze wurden in den Beispielen VESTENAMER$^R$ 8012 (Hüls AG, Marl) (C1) bzw. DURANIT$^R$ (Hüls AG, Marl) (C2) eingesetzt.

Zur Verstärkung der Formmassen dienten Schnittglasfasern (D1) mit der Bezeichnung VETROTEX$^R$ EC 10 P327 (Vetrotex Deutschland GmbH, Herzogenrath).

Als Beispiel für einen Füllstoff kam in den hier beschriebenen Versuchen ein Titandioxid R-FKD (Bayer AG, Leverkusen) (D2) zum Einsatz.

Triphenylphosphat (DISFLAMOLL$^R$ TP, Bayer AG, Leverkusen) wurde in den Beispielen als Brandschutzmittel (E) eingesetzt.

Als Beispiel für einen geeigneten Zusatzstoff wurde MARLOTHERM$^R$ S (Hüls AG, Marl) ausgewählt (F).

Folgende Materialien wurden in den aufgeführten, nicht erfindungsgemäßen Vergleichsbeispielen verwendet: Polypropylen( VESTOLEN$^R$ P 7000, Hüls AG, Marl); Polyethersulfon (ULTRASON$^R$ E 1000, BASF AG, Ludwigshafen); Polycarbonat (MAKROLON$^R$ 2800, Bayer AG, Leverkusen); Polybutylenterephthalat (VESTODUR$^R$ 2000, Hüls AG, Marl); Polystyrol (VESTYRON$^R$ 640-30 und VESTYRON$^R$ 616-30, beide Hüls AG, Marl).

Zur Verwendung in den Testkörpern wurden Platten mit den Abmessungen 130 x 130 x 2 mm aus den festen Komponenten spritzgegossen.

Als Versuchslatices wurden die Styrol-Butadien-Copolymerisate BUNATEX$^R$ SL 2800 (L1) (28 % Styrol, Feststoffgehalt des Latex 67 %) und BUNATEX$^R$ SL 3510 (L2) (35 % Styrol, Feststoffgehalt des Latex 68 %) (beide Hüls AG, Marl) sowie Verschnitte von L1 mit diversen Naturlatexgehalten (L3 = 100 % Naturlatex Typ Low Ammonia, L4 = 80 % Naturlatex, L5 = 60 % Naturlatex, L6 = 40 % Naturlatex) verwendet.

Der Latex-Schaum wurde nach dem bekannten Schlagschaumverfahren hergestellt. Bei diesem Verfahren wird der Latex mit Vulkanisierhilfsmitteln und Verarbeitungshilfsmitteln versetzt und durch Einschlagen von Luft auf die gewünschte Dichte gebracht. Nach dem Verschäumen wird das Geliermittel zugemischt. Der Geliermittelzusatz ist nach Art und Menge auf eine Gelierzeit des Latex-Schaums von ca. 20 Minuten bei einer Temperatur von ca. 18 °C ausgelegt.

Folgende Rezepturen wurden verwendet:

| | Gewichtsteile naß | trocken |
|---|---|---|
| L1 bis L6 | 149,3 | 100 |
| Kaliumoleat | 4,4 | 0,75 |
| Vulkanisationsmitteldispersion | 18,0 | 9,0 |
| Natriumcarboxymethylcellulose | 10,0 | 0,25 |
| Natriumsilikofluoriddispersion | 8,0 | 2,0 |

Die Vulkanisationsmittel wurden mit Hilfe einer Kolloidmühle in Wasser fein verteilt. Es wurde folgendes System verwendet:

| | Gewichtsteile |
|---|---|
| Schwefel | 2,0 |
| Zink-N-diethyldithiocarbamat | 1,0 |
| Zink-2-mercaptobenzothiazol | 1,0 |
| Diphenylguanidin | 1,0 |
| Zinkoxid | 3,0 |
| Alterungsschutzmittel | 1,0 |
| Bentonit | 0,09 |
| VULTAMOL$^R$ | 0,45 |
| Wasser (destilliert) | 8,46 |

Die Natriumsilikofluorid-Dispersion wurde mit Hilfe von Dispergiermittel ebenfalls in einer Kolloidmühle hergestellt. Sie hatte folgende Zusammensetzung:

| | Gewichtsteile |
|---|---|
| Natriumsilikofluorid | 25 |
| Bentonit | 2 |
| Kalilauge (10%ig) | 1 |
| Wasser (destilliert) | 72 |

Die Zusammensetzung in Gewichtsteilen der erfindungsgemäßen thermoplastischen Formmassen ist in der nachfolgenden Tabelle angegeben:

| Bsp. | A | B | C1 | C2 | D1 | D2 | E | F | Bezeichnung | Formbeständigkeit in der Wärme (°C) |
|---|---|---|---|---|---|---|---|---|---|---|
| 1- 7 | 60 | 230 | 10 | 10 | 0 | 14 | 0 | 0 | P1 | 111 |
| 8-15 | 90 | 10 | 10 | 5 | 0 | 10 | 13 | 0 | P2 | 129 |
| 16-23 | 94 | 8 | 9 | 0 | 0 | 0 | 0 | 0 | P3 | 188 |
| 24-29 | 60 | 50 | 10 | 0 | 0 | 0 | 17 | 0 | P4 | 101 |
| 30-32 | 60 | 70 | 10 | 10 | 0 | 10 | 0 | 0 | P5 | 126 |
| 33-38 | 90 | 0 | 5 | 0 | 0 | 0 | 0 | 4 | P6 | 169 |
| 39-43 | 94 | 9 | 5 | 0 | 12 | 0 | 0 | O | P7 | 190 |

Die zu Prüfzwecken verwendeten Probekörper wurden folgendermaßen hergestellt: Nach der Erzeugung des Latex-Schaums und Ausbreitung einer ca. 1 cm dicken Schaumschicht auf einer Glasscheibe wurde ein Gewebestreifen eingelegt und mit einer weiteren Schaumschicht abgedeckt. Auf dieses Schaumbett wurden die frisch spritzgegossenen Thermoplast-Platten gelegt. Eine Aktivierung der Oberfläche war bei einigen Platten, die bereits einige Tage gelagert waren und dabei nicht vor Sonneneinstrahlung oder Wärmeeinwirkung geschützt wurden, durch Waschen mit einem mit Aceton oder Toluol getränkten Lappen oder durch Abwaschen mit Seifenlauge notwendig.

Diese Probekörper wurden nun mittels Mikrowellenaufheizung innerhalb weniger Minuten (ca. 2 bis 6 Minuten) auf eine Temperatur von ca. 100 °C erwärmt und insgesamt 8 bis 10 Minuten bei dieser Temperatur gehalten, um den Latex-Schaum zu gelieren und zu vulkanisieren. Der Mikrowellenapplikator hatte eine Frequenz von 2,45 GHz und eine Leistungsdichte von 20 kW/m$^3$.

Die Qualität der Haftung zwischen Latex-Schaum und Thermoplastmaterial wurde durch Ziehen am eingelegten Gewebestreifen im 90°-Winkel zur Thermoplast-Platte beurteilt. Die angelegte Zugkraft wurde jeweils so weit gesteigert, daß es entweder zu einem adhäsiven Ablösen des Schaums von der Thermoplastoberfläche oder zu einem Bruch im Schaumstoff kam. Ein Ablösen der Schaumschicht von der Thermoplast-Platte wird als adhäsive Haftung bezeichnet. Ein Bruch im Schaumkörper bedeutet, daß die Haftkraft des Schaums zum Thermoplastteil größer ist, als die Einreiß- bzw. Weiterreißfestigkeit des Schaums an sich (kohäsiver Bruch). Bei der Beurteilung der Latexschaum-Verbundgüte wurde unterschieden zwischen Adhäsivbruch (Ad ≙ 0 Punkte), Kohäsivbruch (K ≙ 2 Punkte) und teilweiser Haftung (t ≙ 1 Punkt).

Beispiel 1

Die oben beschriebene PPE-Formmasse P1 wurde in der beschriebenen Weise mit einem auf eine Dichte von 70 g/l aufgeschlagenen Latex-Schaum L1 vulkanisiert.
Die Verbundprüfung ergab in sechs Versuchen als Summe 11 Punkte.

Beispiel 2

Die oben beschriebene PPE-Formmasse P1 wurde in der beschriebenen Weise mit einem auf eine Dichte von 100 g/l aufgeschlagenen Latex-Schaum L1 vulkanisiert.
Die Verbundprüfung ergab in sechs Versuchen als Summe 10 Punkte.

Beispiel 3

Die oben beschriebene PPE-Formmasse P1 wurde in der beschriebenen Weise mit einem auf eine Dichte von 150 g/l aufgeschlagenen Latex-Schaum L1 vulkanisiert.
Die Verbundprüfung ergab in sechs Versuchen als Summe 11 Punkte.

Beispiel 4

Die oben beschriebene PPE-Formmasse P1 wurde in der beschriebenen Weise mit einem auf eine Dichte von 70 g/l aufgeschlagenen Latex-Schaum L2 vulkanisiert.
Die Verbundprüfung ergab in sechs Versuchen als Summe 11 Punkte.

Beispiel 5

Die oben beschriebene PPE-Formmasse P1 wurde in der beschriebenen Weise mit einem auf eine Dichte von 100 g/l aufgeschlagenen Latex-Schaum L2 vulkanisiert.
Die Verbundprüfung ergab in sechs Versuchen als Summe 11 Punkte.

Beispiel 6

Die oben beschriebene PPE-Formmasse P1 wurde in der beschriebenen Weise mit einem auf eine Dichte von 150 g/l aufgeschlagenen Latex-Schaum L2 vulkanisiert.
Die Verbundprüfung ergab in sechs Versuchen als Summe 11 Punkte.

Vergleichsbeispiel 7

Die oben beschriebene PPE-Formmasse P1 wurde in der beschriebenen Weise mit einem auf eine Dichte von 100 g/l aufgeschlagenen Latex-Schaum L3 vulkanisiert.
Die Verbundprüfung ergab in sechs Versuchen als Summe 0 Punkte.

Beispiel 8

Die oben beschriebene PPE-Formmasse P2 wurde in der beschriebenen Weise mit einem auf eine Dichte von 70 g/l aufgeschlagenen Latex-Schaum L1 vulkanisiert.
Die Verbundprüfung ergab in sechs Versuchen als Summe 12 Punkte.

Beispiel 9

Die oben beschriebene PPE-Formmasse P2 wurde in der beschriebenen Weise mit einem auf eine Dichte von 100 g/l aufgeschlagenen Latex-Schaum L1 vulkanisiert.
Die Verbundprüfung ergab in sechs Versuchen als Summe 10 Punkte.

Beispiel 10

Die oben beschriebene PPE-Formmasse P2 wurde in der beschriebenen Weise mit einem auf eine Dichte von 150 g/l aufgeschlagenen Latex-Schaum L1 vulkanisiert.

Die Verbundprüfung ergab in sechs Versuchen als Summe 11 Punkte.

Beispiel 11

Die oben beschriebene PPE-Formmasse P2 wurde in der beschriebenen Weise mit einem auf eine Dichte von 70 g/l aufgeschlagenen Latex-Schaum L2 vulkanisiert.
Die Verbundprüfung ergab in sechs Versuchen als Summe 10 Punkte.

Beispiel 12

Die oben beschriebene PPE-Formmasse P2 wurde in der beschriebenen Weise mit einem auf eine Dichte von 100 g/l aufgeschlagenen Latex-Schaum L2 vulkanisiert.
Die Verbundprüfung ergab in sechs Versuchen als Summe 10 Punkte.

Beispiel 13

Die oben beschriebene PPE-Formmasse P2 wurde in der beschriebenen Weise mit einem auf eine Dichte von 150 g/l aufgeschlagenen Latex-Schaum L2 vulkanisiert.
Die Verbundprüfung ergab in sechs Versuchen als Summe 11 Punkte.

Vergleichsbeispiel 14

Die oben beschriebene PPE-Formmasse P2 wurde in der beschriebenen Weise mit einem auf eine Dichte von 100 g/l aufgeschlagenen Latex-Schaum L3 vulkanisiert.
Die Verbundprüfung ergab in sechs Versuchen als Summe 0 Punkte.

Beispiel 15

Die oben beschriebene PPE-Formmasse P2 wurde in der beschriebenen Weise mit einem auf eine Dichte von 100 g/l aufgeschlagenen Latex-Schaum L6 vulkanisiert.
Die Verbundprüfung ergab in sechs Versuchen als Summe 12 Punkte.

Beispiel 16

Die oben beschriebene PPE-Formmasse P3 wurde in der beschriebenen Weise mit einem auf eine Dichte von 70 g/l aufgeschlagenen Latex-Schaum L1 vulkanisiert.
Die Verbundprüfung ergab in sechs Versuchen als Summe 10 Punkte.

Beispiel 17

Die oben beschriebene PPE-Formmasse P3 wurde in der beschriebenen Weise mit einem auf eine Dichte von 100 g/l aufgeschlagenen Latex-Schaum L1 vulkanisiert.
Die Verbundprüfung ergab in sechs Versuchen als Summe 11 Punkte.

Beispiel 18

Die oben beschriebene PPE-Formmasse P3 wurde in der beschriebenen Weise mit einem auf eine Dichte von 150 g/l aufgeschlagenen Latex-Schaum L1 vulkanisiert.
Die Verbundprüfung ergab in sechs Versuchen als Summe 12 Punkte.

Beispiel 19

Die oben beschriebene PPE-Formmasse P3 wurde in der beschriebenen Weise mit einem auf eine Dichte von 70 g/l aufgeschlagenen Latex-Schaum L2 vulkanisiert.
Die Verbundprüfung ergab in sechs Versuchen als Summe 11 Punkte.

Beispiel 20

Die oben beschriebene PPE-Formmasse P3 wurde in der beschriebenen Weise mit einem auf eine Dichte von 100 g/l aufgeschlagenen Latex-Schaum L2 vulkanisiert.
Die Verbundprüfung ergab in sechs Versuchen als Summe 10 Punkte.

Beispiel 21

Die oben beschriebene PPE-Formmasse P3 wurde in der beschriebenen Weise mit einem auf eine Dichte von 150 g/l aufgeschlagenen Latex-Schaum L2 vulkanisiert.
Die Verbundprüfung ergab in sechs Versuchen als Summe 12 Punkte.

Vergleichsbeispiel 22

Die oben beschriebene PPE-Formmasse P3 wurde in der beschriebenen Weise mit einem auf eine Dichte von 100 g/l aufgeschlagenen Latex-Schaum L3 vulkanisiert.
Die Verbundprüfung ergab in sechs Versuchen als Summe 0 Punkte.

Beispiel 23

Die oben beschriebene PPE-Formmasse P3 wurde in der beschriebenen Weise mit einem auf eine Dichte von 100 g/l aufgeschlagenen Latex-Schaum L6 vulkanisiert.
Die Verbundprüfung ergab in sechs Versuchen als Summe 11 Punkte.

Beispiel 24

Die oben beschriebene PPE-Formmasse P4 wurde in der beschriebenen Weise mit einem auf eine Dichte von 100 g/l aufgeschlagenen Latex-Schaum L1 vulkanisiert.
Die Verbundprüfung ergab in sechs Versuchen als Summe 12 Punkte.

Beispiel 25

Die oben beschriebene PPE-Formmasse P4 wurde in der beschriebenen Weise mit einem auf eine Dichte von 100 g/l aufgeschlagenen Latex-Schaum L2 vulkanisiert.
Die Verbundprüfung ergab in sechs Versuchen als Summe 11 Punkte.

Vergleichsbeispiel 26

Die oben beschriebene PPE-Formmasse P4 wurde in der beschriebenen Weise mit einem auf eine Dichte von 100 g/l aufgeschlagenen Latex-Schaum L3 vulkanisiert.
Die Verbundprüfung ergab in sechs Versuchen als Summe 1 Punkt.

Beispiel 27

Die oben beschriebene PPE-Formmasse P4 wurde in der beschriebenen Weise mit einem auf eine Dichte von 100 g/l aufgeschlagenen Latex-Schaum L4 vulkanisiert.
Die Verbundprüfung ergab in sechs Versuchen als Summe 5 Punkte.

Beispiel 28

Die oben beschriebene PPE-Formmasse P4 wurde in der beschriebenen Weise mit einem auf eine Dichte von 100 g/l aufgeschlagenen Latex-Schaum L5 vulkanisiert.
Die Verbundprüfung ergab in sechs Versuchen als Summe 10 Punkte.

Beispiel 29

Die oben beschriebene PPE-Formmasse P4 wurde in der beschriebenen Weise mit einem auf eine Dichte von 100 g/l aufgeschlagenen Latex-Schaum L6 vulkanisiert.

Die Verbundprüfung ergab in sechs Versuchen als Summe 9 Punkte.

Beispiel 30

Die oben beschriebene PPE-Formmasse P5 wurde in der beschriebenen Weise mit einem auf eine Dichte von 100 g/l aufgeschlagenen Latex-Schaum L1 vulkanisiert.
Die Verbundprüfung ergab in sechs Versuchen als Summe 11 Punkte.

Beispiel 31

Die oben beschriebene PPE-Formmasse P5 wurde in der beschriebenen Weise mit einem auf eine Dichte von 100 g/l aufgeschlagenen Latex-Schaum L2 vulkanisiert.
Die Verbundprüfung ergab in sechs Versuchen als Summe 11 Punkte.

Vergleichsbeispiel 32

Die oben beschriebene PPE-Formmasse PS wurde in der beschriebenen Weise mit einem auf eine Dichte von 100 g/l aufgeschlagenen Latex-Schaum L3 vulkanisiert.
Die Verbundprüfung ergab in sechs Versuchen als Summe 0 Punkte.

Beispiel 33

Die oben beschriebene PPE-Formmasse P6 wurde in der beschriebenen Weise mit einem auf eine Dichte von 100 g/l aufgeschlagenen Latex-Schaum L1 vulkanisiert.
Die Verbundprüfung ergab in sechs Versuchen als Summe 11 Punkte.

Beispiel 34

Die oben beschriebene PPE-Formmasse P6 wurde in der beschriebenen Weise mit einem auf eine Dichte von 100 g/l aufgeschlagenen Latex-Schaum L2 vulkanisiert.
Die Verbundprüfung ergab in sechs Versuchen als Summe 10 Punkte.

Vergleichsbeispiel 35

Die oben beschriebene PPE-Formmasse P6 wurde in der beschriebenen Weise mit einem auf eine Dichte von 100 g/l aufgeschlagenen Latex-Schaum L3 vulkanisiert.
Die Verbundprüfung ergab in sechs Versuchen als Summe 0 Punkte.

Beispiel 36

Die oben beschriebene PPE-Formmasse P6 wurde in der beschriebenen Weise mit einem auf eine Dichte von 100 g/l aufgeschlagenen Latex-Schaum L4 vulkanisiert.
Die Verbundprüfung ergab in sechs Versuchen als Summe 5 Punkte.

Beispiel 37

Die oben beschriebene PPE-Formmasse P6 wurde in der beschriebenen Weise mit einem auf eine Dichte von 100 g/l aufgeschlagenen Latex-Schaum L5 vulkanisiert.
Die Verbundprüfung ergab in sechs Versuchen als Summe 10 Punkte.

Beispiel 38

Die oben beschriebene PPE-Formmasse P6 wurde in der beschriebenen Weise mit einem auf eine Dichte von 100 g/l aufgeschlagenen Latex-Schaum L6 vulkanisiert.
Die Verbundprüfung ergab in sechs Versuchen als Summe 10 Punkte.

Beispiel 39

Die oben beschriebene PPE-Formmasse P7 wurde in der beschriebenen Weise mit einem auf eine Dichte von 100 g/l aufgeschlagenen Latex-Schaum L1 vulkanisiert.
Die Verbundprüfung ergab in sechs Versuchen als Summe 10 Punkte.

Beispiel 40

Die oben beschriebene PPE-Formmasse P7 wurde in der beschriebenen Weise mit einem auf eine Dichte von 100 g/l aufgeschlagenen Latex-Schaum L2 vulkanisiert.
Die Verbundprüfung ergab in sechs Versuchen als Summe 10 Punkte.

Vergleichsbeispiel 41

Die oben beschriebene PPE-Formmasse P7 wurde in der beschriebenen Weise mit einem auf eine Dichte von 100 g/l aufgeschlagenen Latex-Schaum L3 vulkanisiert.
Die Verbundprüfung ergab in sechs Versuchen als Summe 0 Punkte.

Beispiel 42

Die oben beschriebene PPE-Formmasse P7 wurde in der beschriebenen Weise mit einem auf eine Dichte von 100 g/l aufgeschlagenen Latex-Schaum L5 vulkanisiert.
Die Verbundprüfung ergab in sechs Versuchen als Summe 9 Punkte.

Beispiel 43

Die oben beschriebene PPE-Formmasse P7 wurde in der beschriebenen Weise mit einem auf eine Dichte von 100 g/l aufgeschlagenen Latex-Schaum L6 vulkanisiert.
Die Verbundprüfung ergab in sechs Versuchen als Summe 8 Punkte.

Vergleichsbeispiel 44

Polypropylen (VESTOLEN$^R$ P 7000) wurde in der beschriebenen Weise mit einem auf eine Dichte von 100 g/l aufgeschlagenen Latex-Schaum L1 vulkanisiert.
Die Verbundprüfung ergab in sechs Versuchen als Summe 0 Punkte.

Vergleichsbeispiel 45

Polypropylen (VESTOLEN$^R$ P 7000) wurde in der beschriebenen Weise mit einem auf eine Dichte von 100 g/l aufgeschlagenen Latex-Schaum L6 vulkanisiert.
Die Verbundprüfung ergab in sechs Versuchen als Summe 0 Punkte.

Vergleichsbeispiel 46

Polyethersulfon (ULTRASON$^R$ E 1000) wurde in der beschriebenen Weise mit einem auf eine Dichte von 100 g/l aufgeschlagenen Latex-Schaum L1 vulkanisiert.
Die Verbundprüfung ergab in sechs Versuchen als Summe 0 Punkte.

Vergleichsbeispiel 47

Polyethersulfon (ULTRASON$^R$ E 1000) wurde in der beschriebenen Weise mit einem auf eine Dichte von 100 g/l aufgeschlagenen Latex-Schaum L6 vulkanisiert.
Die Verbundprüfung ergab in sechs Versuchen als Summe 0 Punkte.

Vergleichsbeispiel 48

Polycarbonat (MAKROLON$^R$ 2800) wurde in der beschriebenen Weise mit einem auf eine Dichte von 100 g/l aufgeschlagenen Latex-Schaum L1 vulkanisiert.

Die Verbundprüfung ergab in sechs Versuchen als Summe 0 Punkte.

Vergleichsbeispiel 49

Polycarbonat (MAKROLON$^R$ 2800) wurde in der beschriebenen Weise mit einem auf eine Dichte von 100 g/l aufgeschlagenen Latex-Schaum L6 vulkanisiert.
Die Verbundprüfung ergab in sechs Versuchen als Summe 0 Punkte.

Vergleichsbeispiel 50

Polybutylenterephthalat (VESTODUR$^R$ 2000) wurde in der beschriebenen Weise mit einem auf eine Dichte von 100 g/l aufgeschlagenen Latex-Schaum L1 vulkanisiert.
Die Verbundprüfung ergab in sechs Versuchen als Summe 0 Punkte.

Vergleichsbeispiel 51

Polybutylenterephthalat (VESTODUR$^R$ 2000) wurde in der beschriebenen Weise mit einem auf eine Dichte von 100 g/l aufgeschlagenen Latex-Schaum L6 vulkanisiert.
Die Verbundprüfung ergab in sechs Versuchen als Summe 0 Punkte.

Vergleichsbeispiel 52

Polystyrol (VESTYRON$^R$ 616-30) wurde in der beschriebenen Weise mit einem auf eine Dichte von 100 g/l aufgeschlagenen Latex-Schaum L1 vulkanisiert.
Die Verbundprüfung ergab in sechs Versuchen als Summe 10 Punkte, wobei jedoch die Thermoplast-Platten jeweils starke Verformungen aufwiesen.

Vergleichsbeispiel 53

Polystyrol (VESTYRON$^R$ 616-30) wurde in der beschriebenen Weise mit einem auf eine Dichte von 100 g/l aufgeschlagenen Latex-Schaum L2 vulkanisiert.
Die Verbundprüfung ergab in sechs Versuchen als Summe 10 Punkte, wobei jedoch die Thermoplast-Platten jeweils starke Verformungen aufwiesen.

Vergleichsbeispiel 54

Polystyrol (VESTYRON$^R$ 616-30) wurde in der beschriebenen Weise mit einem auf eine Dichte von 100 g/l aufgeschlagenen Latex-Schaum L4 vulkanisiert.
Die Verbundprüfung ergab in sechs Versuchen als Summe 0 Punkte, wobei zusätzlich die Thermoplast-Platten jeweils starke Verformungen aufwiesen.

Vergleichsbeispiel 55

Polystyrol (VESTYRON$^R$ 616-30) wurde in der beschriebenen Weise mit einem auf eine Dichte von 100 g/l aufgeschlagenen Latex-Schaum L5 vulkanisiert.
Die Verbundprüfung ergab in sechs Versuchen als Summe 0 Punkte, wobei zusätzlich die Thermoplast-Platten jeweils starke Verformungen aufwiesen.

Vergleichsbeispiel 56

Polystyrol (VESTYRON$^R$ 616-30) wurde in der beschriebenen Weise mit einem auf eine Dichte von 100 g/l aufgeschlagenen Latex-Schaum L6 vulkanisiert.
Die Verbundprüfung ergab in sechs Versuchen als Summe 2 Punkte, wobei zusätzlich die Thermoplast-Platten jeweils starke Verformungen aufwiesen.

Vergleichsbeispiel 57

Polystyrol (VESTYRON[R] 640-30) wurde in der beschriebenen Weise mit einem auf eine Dichte von 100 g/l aufgeschlagenen Latex-Schaum L1 vulkanisiert.
Die Verbundprüfung ergab in sechs Versuchen als Summe 9 Punkte, wobei jedoch die Thermoplast-Platten jeweils starke Verformungen aufwiesen.

Vergleichsbeispiel 58

Polystyrol (VESTYRON[R] 640-30) wurde in der beschriebenen Weise mit einem auf eine Dichte von 100 g/l aufgeschlagenen Latex-Schaum L2 vulkanisiert.
Die Verbundprüfung ergab in sechs Versuchen als Summe 9 Punkte, wobei jedoch die Thermoplast-Platten jeweils starke Verformungen aufwiesen.

Beispiel 59

Entsprechend den vorstehenden Beispielen wurden Verbunde mit ungeschäumtem Latex untersucht. Hierbei wurden die nicht aufgeschlagenen Latices, die kein Geliermittel enthielten, als Film auf den Thermoplastplatten aufgebracht, worauf ein Gewebestreifen eingelegt und mit einem weiteren Film abgedeckt wurde. Anschließend wurde wie vorstehend vulkanisiert und dann die Haftung geprüft. Die Kombination von Latex und Formmasse sowie die Ergebnisse sind der folgenden Tabelle zu entnehmen.

| | P 1 | P 6 | P 7 |
|---|---|---|---|
| L 1 | 10 | nicht geprüft | 11 |
| L 2 | 9 | 11 | nicht geprüft |

## Patentansprüche

1. Verbund zwischen einer polyphenylenetherhaltigen thermoplastischen Formmasse und einem Latex bzw. Latex-Schaumstoff aus einem Latex-Schaum, die Vulkanisier- und Verarbeitungshilfsmittel sowie ggf. Geliermittel enthalten, wobei die thermoplastische Formmasse folgende Bestandteile enthält:
a) 10 bis 100 Gewichtsteile Polyphenylenether (PPE), der im wesentlichen aus Einheiten der Formel

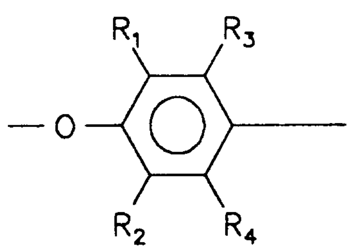

aufgebaut ist, wobei $R_1$ und $R_2$ entweder für eine n-Alkylgruppe mit bis zu 6 C-Atomen stehen oder $R_1$ Wasserstoff und $R_2$ einen tertiären Alkylrest mit bis zu 6 C-Atomen bedeuten; $R_3$ und $R_4$ stehen, unabhängig voneinander, für eine Methylgruppe oder Wasserstoff;
b) 0 bis 80 Gewichtsteile Styrolpolymerisate;
c) 0 bis 30 Gewichtsteile schlagzähmodifizierende Zusätze;
d) 0 bis 40 Gewichtsteile Verstärkungsmittel und/oder Füllstoffe;
e) 0 bis 30 Gewichtsteile Brandschutzmittel und
f) 0 bis 15 Gewichtsteile übliche Zusatzstoffe,
wobei die Formbeständigkeit in der Wärme nach ISO 75, Methode B größer als 90 °C, bevorzugt größer als 100 °C ist,
und ein Latex verwendet wird, der, bezogen auf den gesamten Kautschukgehalt, aus folgenden Komponenten besteht:

I. 20 bis 100 Gewichtsprozent SBR-Latex mit einem Mindeststyrolanteil des polymeren Feststoffs von größer als 15 Gewichtsprozent und
II. 80 bis 0 Gewichtsprozent Naturlatex oder andere, synthetische Latices.

**2.** Verbund gemäß Anspruch 1,
dadurch gekennzeichnet,
daß der Latex im Trockenanteil, bezogen auf den gesamten Kautschukgehalt, mindestens 32 Gewichtsprozent SBR-Latex enthält.

**3.** Verbund gemäß den Ansprüchen 1 oder 2,
dadurch gekennzeichnet,
daß bei den Latex-Mischungen, die bevorzugt mehr als 50 Gewichtsprozent SBR-Latex enthalten, folgende Formel zu berücksichtigen ist:

100 < (Prozent PPE in der thermoplastischen Formmasse) + + (Prozent SBR in der verwendeten Latexmischung).

**4.** Verbund gemäß den Ansprüchen 1 oder 2,
dadurch gekennzeichnet,
daß bei den Latex-Mischungen, die 32 bis 50 Gewichtsprozent SBR-Latex enthalten, folgende Formel zu berücksichtigen ist:

130 < (Prozent PPE in der thermoplastischen Formmasse) + + (Prozent SBR in der verwendeten Latexmischung).

**5.** Verbund gemäß einem der vorhergehenden Ansprüche,
dadurch gekennzeichnet,
daß das Latex-Compound Füllstoffe, Alterungsschutzmittel, Lichtschutzmittel, Verdickungsmittel und/oder flammhemmende Zusatzstoffe enthält.

**6.** Verbund gemäß einem der vorhergehenden Ansprüche,
dadurch gekennzeichnet,
daß der Latex ein unverschäumter Film ist.

**7.** Verbund gemäß einem der vorhergehenden Ansprüche,
dadurch gekennzeichnet,
daß im Polyphenylenether $R_1$ und $R_2$ jeweils für $CH_3$ und $R_3$ und $R_4$ jeweils für Wasserstoff stehen.

**8.** Verbund gemäß einem der vorhergehenden Ansprüche,
dadurch gekennzeichnet,
daß als schlagzähmodifizierender Zusatz Polyoctenamer verwendet wird.

**9.** Verfahren zur Herstellung eines Verbundes gemäß einem der vorhergehenden Ansprüche,
dadurch gekennzeichnet,
daß der Latex durch Einschlagen von Luft oder einem anderen Gas aufgeschäumt wird und im Kontakt mit einem Formteil, das aus der thermoplastischen Formmasse besteht, unter den für die Herstellung von Latexschaum üblichen Bedingungen vulkanisiert wird.

**10.** Verfahren zur Herstellung eines Verbundes gemäß einem der Ansprüche 1 bis 8,
dadurch gekennzeichnet,
daß auf die Formmasse ein unverschäumter Latexfilm aufgebracht wird und anschließend unter den für die Filmherstellung üblichen Bedingungen vulkanisiert wird.

Europäisches Patentamt

# EUROPÄISCHER RECHERCHENBERICHT

Nummer der Anmeldung

EP 93100176.2

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.⁵) |
|---|---|---|---|
| X | EP - A - 0 268 754 (HÜLS AKTIENGESELLSCHAFT) * Gesamt * | 1,2,5-8,10 | B 32 B 5/18<br>B 32 B 25/08 |
| D,A | EP - A - 0 196 407 (CHEMISCHE WERKE HÜLS AG) * Ansprüche; Seite 9, Zeile 20 - Seite 10, Zeile 28 * | 1,2,5-8,10 | |

RECHERCHIERTE SACHGEBIETE (Int. Cl.⁵)

B 32 B
C 08 J

Der vorliegende Recherchenbericht wurde für alle Patentansprüche erstellt.

| Recherchenort | Abschlußdatum der Recherche | Prüfer |
|---|---|---|
| WIEN | 18-06-1993 | WEIGERSTORFER |

KATEGORIE DER GENANNTEN DOKUMENTEN

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument
& : Mitglied der gleichen Patentfamilie, übereinstimmendes Dokument